Europäisches Patentamt

European Patent Office

Office européen des brevets

(19)

(11) EP 1 108 693 A1

(12) EUROPEAN PATENT APPLICATION

(43) Date of publication:
20.06.2001 Bulletin 2001/25

(51) Int Cl.7: C03C 17/36

(21) Application number: 00310813.1

(22) Date of filing: 05.12.2000

(84) Designated Contracting States:
AT BE CH CY DE DK ES FI FR GB GR IE IT LI LU
MC NL PT SE TR
Designated Extension States:
AL LT LV MK RO SI

(30) Priority: 06.12.1999 JP 34592599
27.11.2000 JP 2000359059

(71) Applicant: Nippon Sheet Glass Co., Ltd.
Osaka-shi, Osaka 541-8559 (JP)

(72) Inventors:
• Muromachi, Takashi,
Nippon Sheet Glass Co., Ltd.
Osaka-shi, Osaka 541-8559 (JP)

• Kunisada, Terufusa,
Nippon Sheet Glass Co., Ltd.
Osaka-shi, Osaka 541-8559 (JP)
• Noguchi, Tatsuya, Nippon Sheet Glass Co., Ltd.
Osaka-shi, Osaka 541-8559 (JP)

(74) Representative: Towler, Philip Dean
Frank B. Dehn & Co.,
European Patent Attorneys,
179 Queen Victoria Street
London EC4V 4EL (GB)

(54) Heat shading glass, method for manufacturing the same, and heat shading laminated glass using the same

(57) The present invention provides a heat shading glass including a glass sheet and a heat shading film formed on the glass sheet. The heat shading film comprises a first metal oxide film, a first Ag film, a second metal oxide film, a second Ag film, and a third metal oxide film, layered in that order on the glass sheet. The oxide films include indium oxide containing tin oxide. An X-ray diffraction chart of the heat shading film shows a diffraction peak of the indium oxide as well as a diffraction peak of the Ag. Thus, as a heat shading laminated glass, it can be used as window glass for buildings or vehicles, has superior visible light transmittance, reflects infrared radiation, has colorless transmission color and reflection color, and has superior durability.

FIG. 1

EP 1 108 693 A1

**Description**

The present invention relates to a heat shading glass that is suitable as window glass for buildings or vehicles, and more particularly, to a heat shading laminated glass having the ability to shade heat, in which the color of the transmitted light and the reflected light has been considered.

The present invention relates also to a laminated glass that is suitable for automobile windows, and in particular to a heat shading laminated glass with at least 70% visible light transmittance that is appropriate for use in windshields.

Furthermore, the present invention relates to an electrically heatable and heat shading laminated glass in which a large amount of heat can be generated with a relatively low voltage and which also has the above-mentioned heat shading properties.

And furthermore, the present invention also relates to a method for manufacturing a heat shading glass provided with a heat shading film of ITO films and Ag films layered alternately that is formed by sputtering on a glass substrate.

Glass on which three layers, namely a metal oxide film, an Ag film, and another metal oxide film, are layered in that order on a glass substrate is well known in the art of heat shading glass coated with thin films.

To improve the heat shading properties, heat shading glass is known in which the Ag film is split into two layers, and the heat shading glass is provided with a 5-layer configuration of glass / metal oxide film / Ag film / metal oxide film / Ag film / metal oxide film, increasing the reflectance of infrared radiation while sustaining a high visible light transmittance.

There have been numerous publications with regard to heat shading glass having multi-layer films including two Ag layers.

For example, JP H5-70580B (patent family: US 4,996,105; US 4,859,532; EP 0332717 etc.) discloses an article reflecting infrared radiation that is provided with a 5-layer coating of glass / transparent oxide (first layer) / Ag (second layer) / transparent oxide (third layer) / Ag (fourth layer) / transparent oxide (fifth layer), wherein the thickness of the silver films is limited to not more than 110Å, and which has a high visible light transmittance of at least 70%.

JP S63-239043A discloses an article reflecting infrared radiation that is provided with a 5-layer coating of ZnO and Ag films, wherein the thickness of the silver films is limited to 60 - 250Å, and which has a high visible light transmittance of at least 60%.

JP S63-239044A discloses an article reflecting infrared radiation that is provided with a 5-layer coating of transparent oxide (first layer) / Ag (second layer) / transparent oxide (third layer) / Ag (fourth layer) / transparent oxide (fifth layer), in which the thickness of the silver films is set to 70 - 250Å, the surface resistance to at most 6 $\Omega$ /$\square$ ($\Omega$/ square) , and which has a high visible light transmittance of at least 70%.

JP S54-133507A (patent family: US 4,179,181; GB 2017965 etc.) discloses an article reflecting infrared radiation in which a first fire-resistant dielectric layer, a silver layer of 110 to 250Å thickness and a second fire-resistant dielectric layer are formed on a substrate surface, and furthermore an article reflecting infrared radiation in which these layers are repeated in that order (see Fig. 1 in this publication).

JP H4-357025A (patent family: US 5,413,864; US 5,419,969; US 5,532,062; EP 0464789; EP 0488048; EP 0548971; EP 0698585 etc.) discloses a heat shading film in which an oxide film, a metal film and another oxide film are layered alternately on a substrate, wherein the oxide films have a specified internal stress.

JP H5-24149A (patent family: US 5,413,864; US 5,419,969; US 5,532,062; EP 0464789; EP 0488048; EP 0548971; EP 0698585 etc.) discloses a heat shading film in which an oxide film, a film having Ag as the principal component, and another oxide film are layered in that order on a substrate, wherein the (111) diffraction line of Ag has a specified integration width.

JP H8-104547A discloses an insulating glass provided with an oxide film (first layer) / an Ag film (second layer) / a metal oxide film (third layer) / an Ag film (fourth layer) / and a metal oxide film (fifth layer) formed in that order.

More specifically, it is proposed that the metal oxide films have tin oxide or zinc oxide or both as the principal component, that the thickness of the third layer is at least 65nm and at most 80nm, that the thickness of the second layer is at least 7nm and less than 11nm, and that the thickness of the fourth layer is larger than 11nm and at most 14nm.

One of the embodiments discloses a method for forming a tin oxide film by reactive sputtering using a metallic Sn target, under the introduction of argon gas and oxygen gas.

The operational effects of the Ag films in these heat shading films are described in the following documents.

For example, the afore-mentioned JP H5-70580B states that "When the silver films are thick, the transmittance in the visible region is reduced, while the wavelength range of lower transmittance is narrower and the reflection color is of the violet type. On the other hand, if the silver layer thickness is too thin, the silver is formed in an island structure, so that the desired properties will not be obtained."

In Fig. 14 of Glass Technology, Vol. 2, No. 5, Oct. p.254-261, 1980, H. J. Glaser clarifies the dependence of the sheet resistance on the film thickness of Ag in a ZnO / Ag / ZnO multi-layer.

However, using a heat shading glass on which a heat-reflecting multi-layer film is formed as described above, there is the problem that particularly the reflected light will not be colorless for a laminated glass configuration.

The reason for that is that the above-mentioned patent publications are directed to glass reflecting infrared radiation used principally for a double-glazing unit, and do not consider configurations of laminated glass.

For example, the above-mentioned JP H5-70580B does not mention any range of film thicknesses for making the reflected light colorless when configuring the article reflecting infrared radiation as a laminated glass.

Similarly, the above-mentioned JP S63-239044A, JP H8-104547A, JP H10-167766A do not mention any range of film thicknesses for making the reflected light colorless when using them for a laminated glass.

The above-mentioned heat-reflecting multi-layer films are mostly formed by dc sputtering. In particular, reactive sputtering, in which metal oxide films are formed using a metal target and under the introduction of oxygen gas, often is used.

When employing such reactive sputtering, it is important to make sure that the Ag film is not oxidized, so that a heat-reflecting film with suitable properties is obtained.

For this purpose, a very thin metal film serving as a "sacrificial" layer can be formed on top of the Ag film before forming a metal oxide film. A method that often is used is to protect the Ag film from the oxygen plasma by oxidizing this metal film in place of the Ag film with the oxygen plasma. At the same time, the oxidized metal film often is made a part of the metal oxide film.

These methods are explained in the PRIOR ART section of, for example, JP H7-91089B (patent family: US 4,985,312). That is to say, referring to several other publications, this publication explains the effect of migration, and reports the metal barrier layer employed in the referenced publications to prevent this effect. This migration effect is also mentioned in the embodiments of JP H8-104547A and JP H10-167766A.

However, in the methods using such a sacrificial layer, it is difficult to adjust the thickness of the metal layers, and there are the problems that the Ag film degrades, and the visible light transmittance decreases. That is to say, if the metal film is too thin, then the degradation of the Ag film cannot be prevented, and if, on the other hand, the metal film is too thick, then the metal film is not completely oxidized, metal components remain, and the visible light transmittance decreases.

In particular in configurations including two or more Ag layers, the decrease of the transmittance is conspicuous, and it is difficult to achieve both a high visible light transmittance of at least 70%, as necessary for automobile window glass, and superior heat shading properties.

In order to solve these problems with the sacrificial layer (metal barrier layer), it has been proposed to use an oxide target and suppress the introduction of oxygen gas as much as possible when forming the metal oxide films.

For example, an example of JP S62-41740A discloses a method, in which sputtering is performed taking ZnO including $Al_2O_3$ as the target for the metal oxide and introducing 95vol% argon gas and 5vol% oxygen gas.

Furthermore, it is shown that it is also possible to use a conductive metal oxide, such as tin oxide, indium oxide including tin oxide, zinc oxide, or antimony oxide, for the metal oxide.

However, only three-layer configurations are disclosed for this method, and these layer configurations have insufficient heat-reflecting capabilities. Furthermore, there is no specific disclosure regarding ITO as the metal oxide, and there is no suggestion at all regarding its crystal structure.

JP H7-178866A discloses a technique with a heat shading film made of (2n + 1) layers of oxide, Ag, and oxide, layered in this order on a substrate, wherein the oxide is ZnO with added Ga, obtained by sputtering with a ZnO-$Ga_2O_3$ target in an oxygen-free atmosphere. According to this publication, no sacrificial layer is inserted in this method, and a five-layered film is formed, so that the optical properties can be controlled easily, and a heat shading glass that is suitable as automobile glass can be obtained. Moreover, ITO is mentioned as an example of an oxide material other than Ga-doped ZnO.

It also is pointed out that in order to provide a laminated glass in which another substrate is laminated via an intermediate resin film, it is possible to provide an oxide film (for example, a mixed film of titanium oxide and chrome oxide) of at most 100Å thickness as the layer contacting this intermediate resin layer on the inner side of the heat shading film.

However in such a heat shading film, the principal component of the oxide layers is ZnO, and because of the weak chemical durability of the ZnO, there are problems with regard to the durability when using it as laminated glass with an interposed PVB (polyvinyl butyral) resin. Moreover, ITO only is mentioned as a metal oxide, but there is no specific discussion of it.

The afore-mentioned JP H7-91089B suggests that in the heat-reflecting glass, a mixed oxide film of indium oxide and tin oxide (ITO) is formed by dc sputtering in an argon gas atmosphere to which 0 to 4% oxygen gas have been added, using a target of $In_2O_3$ + 5 to 10wt% $SnO_2$.

However, the technique disclosed in this JP H7-91089B relates to the case of one Ag layer. Moreover, a metal Zn layer is used as a barrier layer between the Ag layer and the outermost ITO layer. The crystal structure of the ITO, however, is not mentioned at all.

The following is a discussion of the crystallinity of the Ag film.

Regarding the quality of the Ag film, the afore-mentioned JP H5-24149A mentions that "... to improve the durability of Low-E films, it is indispensable to stabilize the Ag." It seems that in this publication, durability means preventing the deterioration of Low-E films by "peeling off at the interface between the Ag and the oxide" or "increases in particle diameter and changes in coagulation, leading to a more severe clouding".

It is stated that "to suppress clouding due to humidity, it is advantageous to reduce the imperfection of the Ag crystals."

And according to this technique, a range for the integration width $\beta i$ of the Ag (111) diffraction line is specified to stabilize the Ag.

More specifically, "as a method for forming an Ag film in which the imperfection of the crystals is reduced, a method of heating to at least about 200°C during or after film formation and forming an interposed film reducing the imperfection of the crystallinity of the Ag on one or both sides of the interface between the Ag film and the oxide film" is suggested.

Furthermore, it is stated that "for the interposed film reducing the imperfection of the crystallinity of the Ag, a film is preferable that crystallizes easily, and whose interatomic distance in a crystal plane parallel to the substrate is close to the Ag lattice.", and Ti, Zr, ZnO, TiN, ZrN, Pt, Au, Al, and Pd are mentioned in particular.

In this publication, ZnO is mentioned as an example of an oxide film in the heat shading film.

In JP H7-315874A, the following technique is mentioned for a heat shading glass in which a base thin film, a metal thin film, and a protective thin film are formed in that order on a glass substrate.

First, the metal thin film is made of Ag, to which at least one of the elements from the group consisting of Pd, Pt, Sn, Zn, In, Cr, Ti, Si, Zr, Nb, and Ta has been added. Then, the base film is polycrystalline, and it is suggested that it can be made of ITO. It only is mentioned that this ITO film can be made by sputtering.

Summing up the related art as described above, the following can be said:

(1) First, there are many publications disclosing a heat shading glass having a five-layer configuration including two Ag layers so as to improve the heat shading.

However, there is the problem that the reflection light is not colorless, when such a heat shading glass is configured as a laminated glass.

Moreover, ZnO is used for the oxide film, so that the durability is poor, when using it as a laminated glass.

And although the use of ITO for the oxide film is suggested, there is no disclosure regarding its crystallinity.

(2) It has been pointed out that to obtain a heat-reflecting film with superior properties while ensuring a high transmittance, the Ag films should not be oxidized.

Therefore, methods using sacrificial layers and methods in which the metal oxide films are formed using oxide targets without the introduction of oxygen have been proposed.

However, in the methods using sacrificial layers, there is the problem that the Ag films deteriorate, and the visible light transmittance decreases.

Moreover, many methods using oxide targets have been disclosed, in which ZnO is used for the oxide layers. There are also cases, where ITO is used for the oxide layers, but not for heat shading films in five-layer configuration. Moreover, there is no suggestion at all about using such a heat shading film in a laminated glass.

(3) Moreover, it has been pointed out that to obtain a superior heat-reflecting film, attention should be paid to the crystallinity of the Ag films.

More specifically, a method involving heating and forming an interposed layer has been given as an example of a method for forming an Ag film, in which the imperfection of the crystal has been reduced. For the interposed layer, films have been suggested that are preferable for epitaxially growing Ag films.

However, only cases in which ZnO is used for the oxide layers are disclosed.

In view of the problems of the related art, it is an object of the present invention to provide a heat shading laminated glass that can be used as window glass for buildings or vehicles, which has superior visible light transmittance, and reflects infrared radiation, without using a sacrificial layer. It is another object of the present invention to provide a heat shading laminated glass, in which transmission color and reflection color are colorless, and which has superior durability, It is another object of the present invention to provide a laminated glass that can be used as a window glass for vehicles, and in particular, a heat shading laminated glass that can be used appropriately for windshields, and which has a visible light transmittance of at least 70%.

It is a further object of the present invention to provide an electrically heatable and heat shading laminated glass, in which a large amount of heat can be generated with a relatively low voltage, and which also has the afore-mentioned heat shading properties.

It is a yet another object of the present invention to provide a method for manufacturing a heat shading glass that can be used in the above-mentioned heat shading laminated glass.

In a first aspect of the present invention, a heat shading glass includes:

a glass sheet; and

a heat shading film formed on the glass sheet;

wherein the heat shading film includes a first metal oxide film, a first Ag film, a second metal oxide film, a second Ag film, and a third metal oxide film, layered in that order on the glass sheet;

wherein the oxide films include indium oxide containing tin oxide; and

wherein an X-ray diffraction chart of the heat shading film shows a diffraction peak of the indium oxide as well as a diffraction peak of the Ag.

It is preferable that in the heat shading glass, the crystal orientation of the indium oxide is the (222) plane, and the crystal orientation of the Ag is the (111) plane.

It is preferable that in the heat shading glass, the peak intensity of the indium oxide diffraction peak per unit film thickness of the metal oxide films is at least 50 cps. $2\theta$ /nm.

It is preferable that in the heat shading glass, the diffraction angle $2\theta$ of the indium oxide for X-ray diffraction at the Cu K$\alpha$ line is $29.9° < 2\theta < 30.1°$.

It is preferable that diffraction angle $2\theta$ is measured at the Cu K$\alpha$1 line, and it is preferable that it is measured with the peak-top method. It is preferable that in the heat shading glass, the sheet resistance of the heat shading film is not larger than $5\Omega/\square$.

According to a second aspect of the present invention, a heat shading laminated glass includes:

the heat shading glass according to the first aspect;

a thermoplastic resin; and

taking the glass sheet of said heat shading glass as afirst glass sheet, a second glass sheet;

wherein the first glass sheet, the heat shading film, the thermoplastic resin, and the second glass sheet are layered in that order.

It is preferable that in the heat shading laminated glass,

the film thickness of the first metal oxide film is 20 to 40nm;

the film thickness of the first Ag film is 7 to 15nm;

the film thickness of the second metal oxide film is 60 to 100nm;

the film thickness of the second Ag film is 7 to 15nm; and

the film thickness of the third metal oxide film is 20 to 40nm.

In this case, it is more preferable that the film thicknesses of the first and second Ag films are 7 to 11nm each. The laminated glass that includes these Ag films in the heat shading film between a colored (tinted) glass sheet having a visible light transmittance of about 85% and a clear glass sheet having a visible light transmittance of about 90% easily can have a visible light transmittance of 70% or more, and preferably 75% or more.

It is also preferable that:

the visible light transmittance is at least 70%;

expressed in color coordinates (a, b), the reflection color is in the range of $-3 \leqq a \leqq 3$ and $-3 \leqq b \leqq 3$ on both sides of the heat shading laminated glass; and

the visible light reflectance is at most 10% for both sides of the heat shading laminated glass.

It is more preferable that the visible light transmittance of the laminated glass is at least 75%.

It is preferable that in the heat shading laminated glass, a surface of at least one glass sheet selected from the first and the second glass sheets is provided with a means for electrically connecting the heat shading film.

According to a third aspect of the present invention, a shading glass includes

a glass sheet; and

a heat shading film formed on the glass sheet;

wherein the heat shading film includes a first metal oxide film, a first Ag film, a second metal oxide film, a second Ag film, and a third metal oxide film, layered in that order on the glass sheet;

wherein the oxide films are crystalline and include indium oxide containing tin oxide; and

wherein, in an X-ray diffraction chart of the heat. shading film, the crystal orientation of the indium oxide is the (222) plane.

It is preferable that in the heat shading glass, the Ag films are crystalline.

It is preferable that in the heat shading glass, the crystal orientation of the Ag is the (111) plane.

It is preferable that in the heat shading glass, the sheet resistance of the heat shading film is not larger than 5Ω/□.

According to a fourth aspect of the present invention, a heat shading laminated glass includes:

the heat shading glass according to the third aspect;
a thermoplastic resin; and
taking the glass sheet of said heat shading laminated glass as a first glass sheet, a second glass sheet;
wherein the first glass sheet, the heat shading film, the thermoplastic resin, and the second glass sheet are layered in that order.

It is preferable that in a heat shading laminated glass as in the fourth aspect,

the film thickness of the first metal oxide film is 20 to 40nm;
the film thickness of the first Ag film is 7 to 15nm;
the film thickness of the second metal oxide film is 60 to 100nm;
the film thickness of the second Ag film is 7 to 15nm; and
the film thickness of the third metal oxide film is 20 to 40nm.

In this case, it is more preferable that the film thicknesses of the first and second Ag films are 7 to llnm each. It is also preferable that:

the visible light transmittance is at least 70%;
expressed in color coordinates (a, b), the reflection color is in the range of -3 $\leq$ a $\leq$ 3 and -3 $\leq$ b $\leq$ 3 on both sides of the heat shading laminated glass; and
the visible light reflectance is at most 10% for both sides of the heat shading laminated glass.

In this specification, the color coordinates are based on Hunters' Lab color system. This Hunter's system is advantageous in determining the coordinates by directly reading from a photoelectric colorimeter (by a photoelectric tristimulus colorimetry method), and a system with uniform color space.

It is more preferable that the visible light transmittance of the laminated glass is at least 75%.

It is preferable that in the heat shading laminated glass, a surface of at least one glass sheet selected from the first and the second glass sheets is provided with a means for electrically connecting the heat shading film.

According to a fifth aspect of the present invention, a method for manufacturing a heat shading glass includes:

forming, as a heat shading film, a first metal oxide film, a first Ag film, a second metal oxide film, a second Ag film, and a third metal oxide film, by sputtering on a glass sheet;
wherein the metal oxide films are formed using a target of indium oxide containing tin oxide, while introducing oxygen such that the metal oxide films show crystallinity.

It is preferable that in this method, the metal oxide films are formed while introducing oxygen such that the crystal orientation of the indium oxide is the (222) plane.

It is preferable that in the method, the Ag films are formed such that they are crystalline.

It is preferable that in the method, the Ag films are formed such that the crystal orientation of the Ag is the (111) plane.

According to a sixth aspect of the present invention, a method for manufacturing a heat shading laminated glass includes bonding together:

a heat shading glass obtained by the method for manufacturing a heat shading glass according to the fifth aspect and;
taking the glass sheet of said heat shading glass as a first glass sheet, a second glass sheet;

in such manner that the first glass sheet, the heat shading film, a thermoplastic resin, and the second glass sheet are layered in that order.

It is preferable that in this method,

the film thickness of the first metal oxide film is 20 to 40nm;
the film thickness of the first Ag film is 7 to 15nm;

the film thickness of the second metal oxide film is 60 to 100nm;
the film thickness of the second Ag film is 7 to 15nm; and
the film thickness of the third metal oxide film is 20 to 40nm.

Fig. 1 is a diagram illustrating the cross-sectional structure of a heat shading laminated glass in accordance with the present invention.

Figs. 2A to 2C are X-ray diffraction charts of ITO films.

Figs. 3A to 3C are the charts in Figs. 2A to 2C, from which Cu K$\alpha$2 has been eliminated.

Fig. 4 is a diagram illustrating the separation of the diffraction lines of K$\alpha$1 and K$\alpha$2 with Rachinger's method.

Figs. 5A to 5C are X-ray diffraction charts of a heat shading film including ITO and Ag films.

Figs. 6A to 6C are the charts in Figs. 3A to 3C, from which Cu K$\alpha$2 has been eliminated.

Fig. 7 illustrates an example of how a heat shading laminated glass in accordance with the present invention can be used in a windshield.

Referring to the accompanying drawings, the following is a detailed description of the preferred embodiments of the present invention, and of the particulars leading to its conception.

First, the inventors focused their attention on the crystallinity of ITO and its relation to heat shading and other properties.

When forming an ITO film on glass by dc sputtering using an oxide target of ITO, the properties of the formed ITO film change depending on the oxygen partial pressure. It already has been mentioned that if the oxygen partial pressure is high, and an ITO film is formed on an Ag film, then the Ag film is degraded by the exposure to the oxygen plasma.

As the result of further research of this effect by the inventors, the following aspects became clear:

When, in the process of making ITO films with an oxide target of ITO, oxygen gas is introduced such that a diffraction peak of $In_2O_3$, which is the main component, occurs, then the visible light transmittance of a heat shading film made of five layers eventually becomes higher, even though there is the possibility that the Ag films are exposed to the oxygen plasma. That is to say, in that case, the ITO film crystallizes. The diffraction peak occurs at the (222) plane of $In_2O_3$.

Moreover, heat shading films that are formed in this manner are characterized in that they are superior with regard to heat reflectance and that their sheet resistance is smaller.

Preparatory Examples

*ITO Film*

To explore the reasons for this, using an inline dc sputtering apparatus for laboratory use and an oxide target of ITO, ITO films were formed on a glass substrate while introducing no oxygen at all, and while introducing an amount of oxygen gas that is suitable so, that the ITO film shows crystallinity ($O_2$ = 5 or 10 SCCM for Ar = 98 SCCM). The composition ratio of the ITO target was $In_2O_3$ : $SnO_2$ = 90 : 10 (wt%). A green tinted glass sheet of 2 mm thickness was used as the substrate.

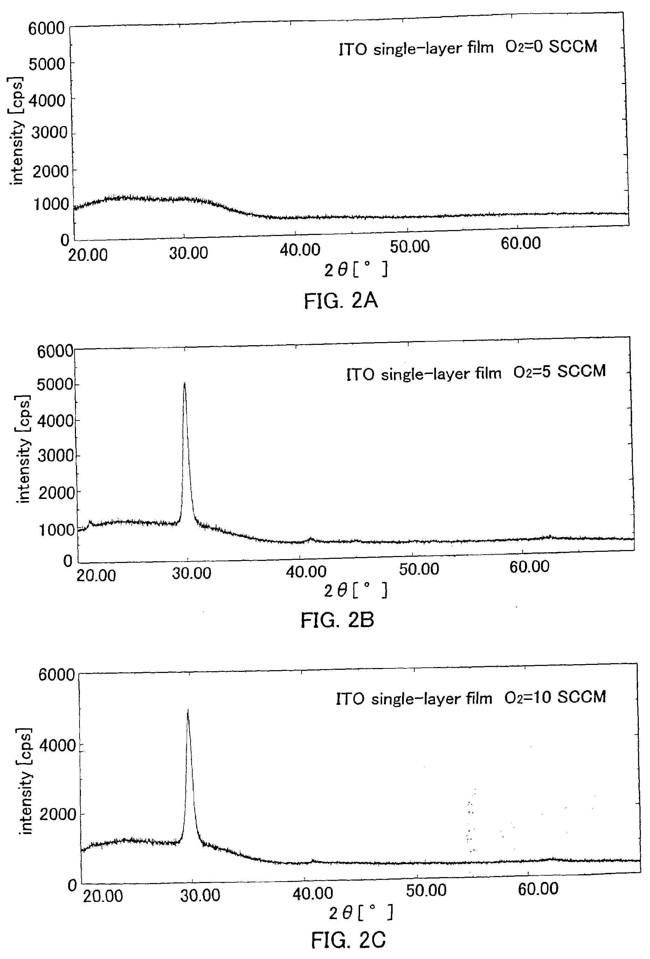

Then, the resulting ITO films were measured by X-ray diffraction. These X-ray diffraction charts are shown in Fig. 2. The film thickness was set to 100nm in each case.

The conditions for the X-ray diffraction measurement were as follows:

- measurement apparatus: RAD-rC by Rigaku Corporation
- X-rays: Cu K$\alpha$, voltage 50kV, current: 200mA
- wide-angle goniometer · scintillation counter
- counter monochromator: curved crystal monochromator
- filter: not used
- divergence slit: 1°, diffusion slit: 1°, photodetection slit: 0.15mm
- scanning mode: continuous· scanning speed: 1°/min
- scanning step: 0.01°, scanning axis: 2θ/θ
- scanning range: 20 to 70°, θ-offset: 0°, fixed angle: 0°.

As can be seen from Fig. 2A, when the ITO film is formed without introducing oxygen (Preparatory Example 1), a diffraction peak in the ITO cannot be observed. As a result, it can be assumed that this ITO film is in the amorphous state.

On the other hand, when the ITO film is formed while introducing oxygen (Preparatory Examples 2 and 3), diffraction peaks from the ITO can be observed (see Figs. 2B and 2C). It can be seen that this diffraction occurs at the

(222) plane of $In_2O_3$.

Table 1 lists the parameters of film thickness and amount of oxygen introduced, and the results of the x-ray diffraction measurement, namely diffraction angle ($2\theta$), full width at half maximum, integrated intensity (Iint), integrated intensity per unit film thickness (Iint / t), and integration width ($\beta i$).

Throughout this specification, the diffraction angle $2\theta$ is determined by the peak-top method from the results of the X-ray diffraction measurement using Cu K$\alpha$1. The purpose of this is to avert the bad influence of the separation at the low angle side of the X-ray diffraction line.

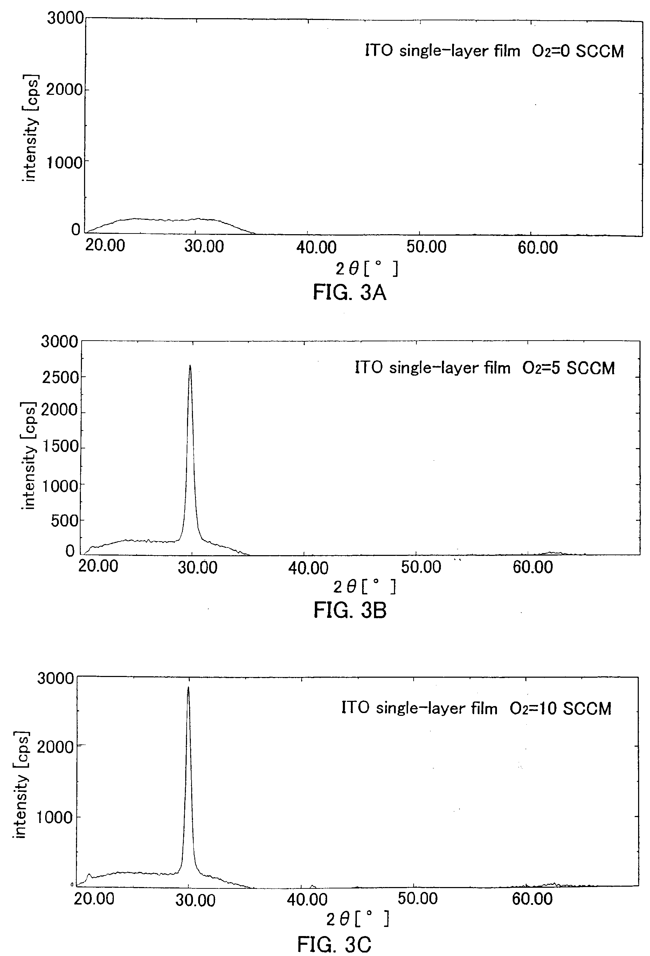

Moreover, the integrated intensity (Iint) is measured and defined under the above-noted conditions. The integrated intensity is calculated only from the diffraction intensity of CuK$\alpha$1 and does not include the component of CuK$\alpha$2. Also the integrated intensity per unit film thickness (Iint / t) is calculated on the same basis. Figs. 3A to 3C show the X-ray diffraction charts, from which Cu K$\alpha$2 has been eliminated.

To eliminate K$\alpha$2, K$\alpha$1 and K$\alpha$2 were separated by Rachinger's method, and a measurement based only Kal was performed.

Rachinger's separation method uses the fact that the X-ray intensity ratio of K$\alpha$1 and K$\alpha$2 is 2 : 1, and that the wavelength difference ($\Delta\lambda = \lambda_{K\alpha1} - \lambda_{K\alpha2}$) is constant, and in this method, the different diffraction lines are separated with a computer.

To be more specific, the diffraction line at K$\alpha$2 has a profile that is analogous to that of the diffraction line of K$\alpha$1, and its intensity is 1/2 and it is shifted $\Delta2\theta r = 2\tan\theta \times \Delta\lambda / \lambda_{k\alpha1}$ $\Delta2\theta_r$ is the difference between the diffraction peaks of K$\alpha$1 and K$\alpha$2.

When i($2\theta$) is the profile at K$\alpha$1 and I($2\theta$) is the actually measured profile, then

$$\text{(Equation 1)} \quad i(2\theta) = I(2\theta) + 1/2 \, (2\theta + \Delta2\theta_r)$$

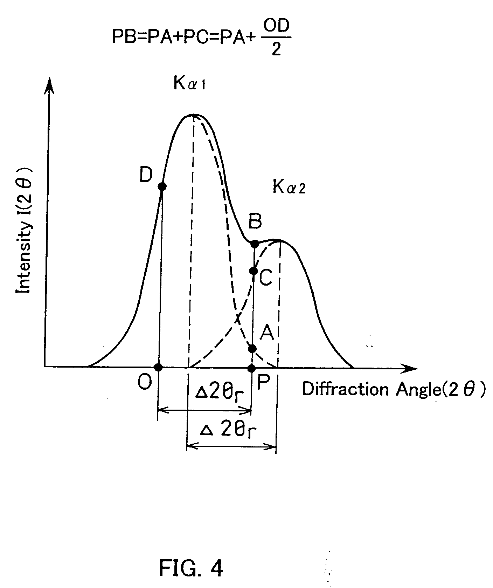

Preparing the chart shown in Fig. 4 in accordance with this Equation 1, it is possible to separate the diffraction lines of K$\alpha$1 and K$\alpha$2.

Table 1

| sample | film thickness [nm] | $O_2$ [SCCM] | $2\theta$ [deg] | full width at half maximum [deg] | Iint [cps.$2\theta$]] | Iint/t [cps.$2\theta$/ nm] | $\beta i$ [deg] |
|---|---|---|---|---|---|---|---|
| Prep. Ex. 1 | 100 | 0 | - | - | - | - | - |
| Prep. Ex. 2 | 100 | 5 | 29.93 | 0.539 | 1594 | 15.94 | 0.603 |
| Prep. Ex. 3 | 100 | 10 | 29.79 | 0.629 | 1778 | 17.78 | 0.721 |

Throughout this specification, the integrated intensity (Iint) is defined as:

$$\text{(Equation 2)} \quad \text{Iint [cps·2}\theta\text{] ]} = \text{maximum peak intensity (Imax [cps]} \times \text{integration width (}\beta i \, [2\theta\text{ ])}$$

Consequently, the integrated strength per unit film thickness (Iint/t) is defined as:

$$\text{(Equation 3)} \quad \text{integrated strength per unit film thickness (Iint/t[cps·2}\theta$$

$$\text{/nm]) = integrated intensity (Iint [cps·2}\theta\text{]) / film thickness (t [nm])}$$

Here, "film thickness (t [nm])" refers to the total film thickness of the ITO films.

Here, the maximum peak thickness is expressed as [cps] (= count/second) according to the examples, but it also can be expressed on any other scale.

For example, if expressed as counts, then the integrated intensity is expressed as maximum peak intensity (Imax[count] $\times$ integration width ($\beta i$ [$2\theta$].

Besides the above-noted calculation method, the integrated intensity also can be determined as the following product, within the range determined by the diffraction lines:

(Equation 4)     Integrated intensity = (arbitrary step width) $\times$ (diffraction intensity at 2 $\theta$ )

Also in this case, it is possible to determine the integrated intensity per unit thickness from the integrated intensity obtained with the calculation method of Equation 4.

These results show that ITO films that are formed using an oxide target while introducing a suitable amount of oxygen gas have superior crystallinity. The diffraction peak of the ITO is that of the (222) plane of the $In_2O_3$.

On the other hand, when the ITO films are formed without introducing oxygen, then a diffraction peak from the ITO cannot be observed, and it seems that the ITO films are in the amorphous state.

*Heat Shading Glass*

Examples 1 and 2 and Comparative Example

Next, a heat shading glass was studied, on which ITO films and Ag films were layered alternately.

It seems that when an Ag film is formed on an ITO film, its crystal growth is influenced depending on whether the ITO film is amorphous or crystalline.

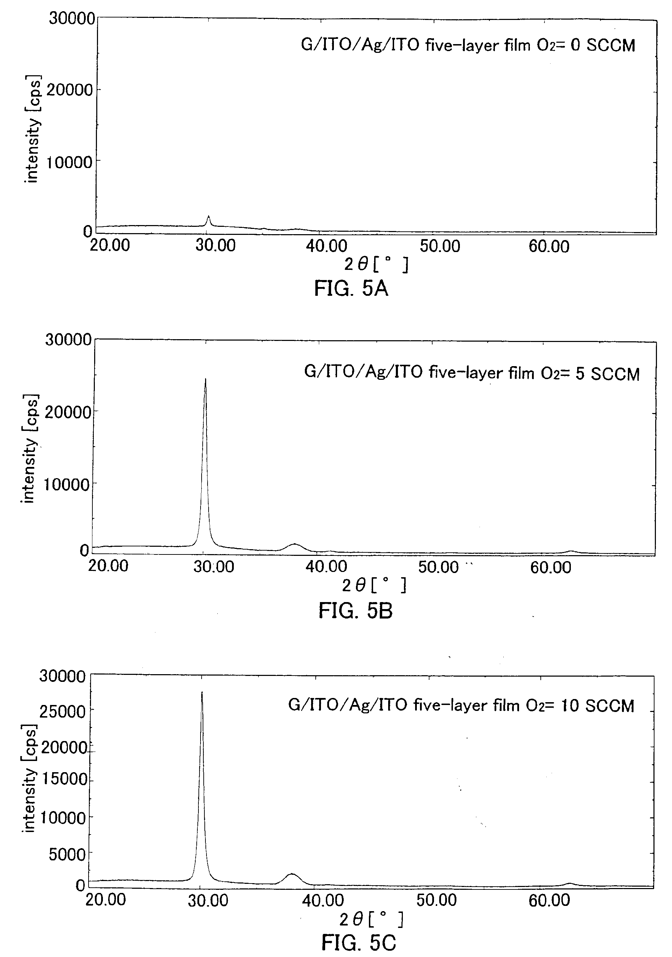

A heat shading film was formed by layering a first ITO film, a first Ag film, a second ITO film, a second Ag film, and a third ITO film in that order on a glass sheet, and an X-ray diffraction measurement was performed. The results are shown in Fig. 5. The measurement parameters for the X-ray diffraction were the same as for the preparatory examples. The amount of oxygen introduced was also $O_2$ = 5 or 10 SCCM for Ar = 98 SCCM. Here, the glass substrate used was a green tinted glass of 2mm thickness and 85.3% visible light transmittance. Table 2 lists the film forming parameters.

Table 2

| sample | film forming parameter | ITO1 | Agl1 | ITO2 | Ag2 | ITO3 |
|---|---|---|---|---|---|---|
| Comparative Ex. 1 | Ar flow [SCCM] | 98 | 98 | 98 | 98 | 98 |
| | $O_2$ flow [SCCM] | 0 | 0 | 0 | 0 | 0 |
| | discharge current [A] | 6 | 0.8 | 6 | 0.8 | 6 |
| | design film thickness [nm] | 35 | 8 | 75 | 8 | 35 |
| Example 1 | Ar flow [SCCM] | 98 | 98 | 98 | 98 | 98 |
| | $O_2$ flow [SCCM] | 5 | 0 | 5 | 0 | 5 |
| | discharge current [A] | 6 | 0.8 | 6 | 0.8 | 6 |
| | design film thickness [nm] | 35 | 8 | 75 | 8 | 35 |
| Example 2 | Ar flow [SCCM] | 98 | 98 | 98 | 98 | 98 |
| | O2 flow [SCCM] | 10 | 0 | 10 | 0 | 10 |
| | discharge current [A] | 6 | 0.8 | 6 | 0.8 | 6 |
| | design film thickness [nm] | 35 | 8 | 75 | 8 | 35 |

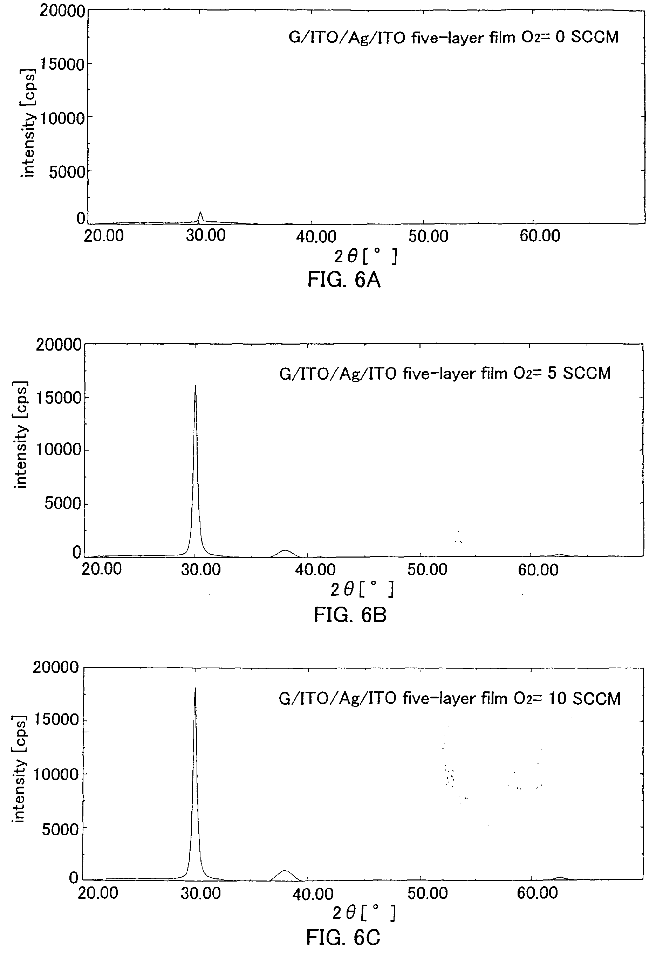

Moreover, as described above, Cu K$\alpha$2 was eliminated and the diffraction angle 2$\theta$, Iint, and the full width at half maximum was measured for the ITO film. Figs. 6A to 6C show the X-ray diffraction charts from which Cu K$\alpha$2 has been eliminated.

Table 3 lists diffraction angle 2 $\theta$, Iint, full width at half maximum, and Iint/t (that is, the integrated intensity per unit thickness divided by the total thickness of the ITO) for the ITO film in the X-ray diffraction chart in Fig. 6.

Here, instead of the standard value of the lattice constant of the ITO films, the lattice constants of $In_2O_3$ and $SnO_2$ are given: The lattice constant of the (222) plane of $In_2O_3$ (cubic) is d = 2.921Å (=0. 2921nm) , and the lattice constant of the (111) plane of $SnO_2$ (orthorhombic) is d = 2.984Å (= 0.2984nm) .

The lattice constant of the (111) plane of Ag is d = 2.38Å (=0.238nm) (for the Cu K$\alpha$ line at $\lambda$ = 1.5405Å (=0.15405nm) ) .

Table 3

| sample | total ITO film thickness [nm] | O$_2$ [SCCM] | 2θ [deg] | Iint [cps·2 θ] | full width at half max. [deg] | Iint/t [cps·2 θ/nm] | visible light transmit [%] |
|---|---|---|---|---|---|---|---|
| Comp. Ex. 1 | 145 | 0 | 30.15 | 352 | - | 2.43 | 57.5 |
| Example 1 | 145 | 5 | 30.01 | 8328 | 0.435 | 57.43 | 78.4 |
| Example 2 | 145 | 10 | 30.03 | 9884 | 0.441 | 68.17 | 79.1 |

First, the ITO films are discussed.

As shown in Figs. 5B and 5C, in the Examples 1 and 2, in which the ITO films are formed while introducing oxygen, a clear diffraction peak can be observed. This peak is from the (222) plane of the In$_2$O$_3$. In Comparative Example 1 (Fig. 5A), in which no oxygen is introduced, the peak of the (222) plane of In$_2$O$_3$, can be observed only faintly.

The following is a discussion of the reasons why in Comparative Example 1, in which no oxygen is introduced, the peak of the (222) plane of In$_2$O$_3$ can be observed only faintly.

It seems that a reason for this is that when Ag films and ITO films are layered alternately, the second ITO film and the third ITO film are influenced by the first and second Ag films below them, and display some crystallinity, even when the first ITO film is not crystalline.

The intensity of the diffraction peak of the In$_2$O$_3$ (222) plane includes a considerable background level. Consequently, the diffraction peak of the (222) plane itself is very small.

It also can be seen from the result of the integrated intensity in Table 3 that there are clearly differences in the crystallization degree of the ITO film depending on whether or not oxygen is introduced during the formation of the ITO film.

Furthermore, when the ITO films are formed while introducing oxygen, their integrated intensity per unit thickness is higher than 50 cps·2 θ/nm, whereas when no oxygen is introduced, the integrated intensity per unit thickness is less than 3 cps·2 θ /nm. Thus, it can be seen that there is also a large difference in the integrated intensity depending on whether or not oxygen is introduced.

The crystallization of the Ag films is discussed below, but if the integrated intensity per unit film thickness from the first, second and third ITO films is only about 3 cps·2 θ /nm, then it is not possible to crystallize the Ag films formed on top of them, and to orient them in the (111) plane.

When in this specification the integrated intensity per unit film thickness for the 5-layer heat shading film is less than 3 cps·2 θ /nm, then the ITO films are deemed not to be crystallized.

As mentioned above, the integrated intensity per unit film thickness in the Preparatory Examples 2 and 3, which are ITO single-layer films, is about 17 cps·2 θ /nm. Compared to that, it can be seen that when the ITO films and Ag films are layered alternately, the value is more than 50 cps·2 θ /nm, and there is greater crystallization.

It seems that the layering enhances the epitaxial growth and boosts the crystallization. In the X-ray diffraction, it seems that the influence of the third ITO film that is located at the uppermost surface and that is most crystallized is most pronounced.

Thus, in a heat shading film in which ITO films and Ag films are layered alternately, if the integrated intensity per unit thickness at the diffraction peak of the In$_2$O$_3$ (222) plane is at least 50 cps·2 θ /nm, the ITO films are deemed to be sufficiently crystallized.

The following is a comparison of the full width at half maximum of the Preparatory Examples 2 and 3, which relate ITO single-layer films, and in the examples, which relate to a film of alternately layered ITO and Ag films.

For the Preparatory Example 2 and the Example 1, the amount of introduced oxygen in both cases is 5 SCCM. For the Preparatory Example 3 and the Example 2, the amount of introduced oxygen in both cases is 10 SCCM.

Comparing the full width at half maximum for the same amount of introduced oxygen, the results are (0.539 → 0.435) and (0.629 → 0.441), so that the full width at half maximum in both cases decreases. That is to say, when the same amount of oxygen is introduced, the crystal structure attained with a layered film of alternate ITO and Ag films is less strained than in the case of a ITO single-layer film.

The following is a discussion of the visible light transmittance of the heat shading film.

In Comparative Example 1, in which the ITO films are formed without introducing oxygen, the visible light transmittance is 57.5%, and as a configuration of glass substrate and heat shading film only, and even more so as a laminated glass, it does not satisfy a visible light transmittance of at least 70%, which is required for automobile windshields.

On the other hand, in the Examples 1 and 2, in which the ITO films are formed under the introduction of oxygen, the visible light transmittance is at least 78%, and they can satisfy a visible light transmittance of at least 70%, as required for automobile windshields, even in a laminated glass configuration.

Thus, it can be seen that the visible light transmittance of the heat shading film changes considerably, depending on whether or not oxygen is introduced during the formation of the ITO films. If the ITO films are formed under the introduction of oxygen, it is possible to increase the visible light transmittance of the heat shading film.

When ITO films and Ag films are layered alternately, the second ITO film is formed on top of the first Ag film. This second ITO film is grown epitaxially on top of the first Ag film, so that its crystallinity is increased. The same is true for the third ITO film, which is formed on top of the second Ag film.

In this manner, the ITO films in the heat shading film are crystallized, taken in their entirety, with a crystal orientation of the $In_2O_3$ (222) plane. Also each of the ITO films is crystallized, with a crystal orientation of the $In_2O_3$ (222) plane.

Summing up the above results, it can be seen that when oxygen is introduced while forming the ITO films of a film of alternating ITO and Ag films, the ITO films are crystalline. Furthermore, when layering ITO films and Ag films alternately, the level of crystallization is higher than in the case of a single-layer ITO film.

The following is a discussion of the diffraction angle 2 θ.

First of all, in Comparative Example 1, in which no oxygen is introduced, the diffraction angle 2 θ is 30.15°, and thus larger than 30.1°. On the other hand, in Examples 1 and 2, which are formed under the introduction of oxygen, the diffraction angles 2 θ are 30.0.1° and 30.03°, that is, less than 30.1°.

That is to say, it becomes clear that the $In_2O_3$ diffraction angle (2 θ) in ITO films that are almost not crystallized is larger than 30.1°, whereas the $In_2O_3$ diffraction angle (2 θ) in sufficiently crystallized ITO films is less than 30.1°.

It should be noted that the 2 θ of the $In_2O_3$ (222) plane is 30.579° and the 2 θ of the $SnO_2$ (111) plane is 29.918°. Consequently, it seems that in ITO films, in which $SnO_2$ is added to $In_2O_3$, the diffraction angle 2θ of the $In_2O_3$ (222) plane is never less than 29.9°.

The following is a discussion of the Ag films.

Table 4 lists the diffraction angle 2 θ, the integrated intensity Iint, and the integration width βi for the Ag films in the X-ray diffraction charts shown in Fig. 5. Here, Cu Kα2 has been eliminated, like for the ITO film.

Table 4

| sample | 2 θ [deg] | Iint [cps·2 θ ] | βi [deg] |
|---|---|---|---|
| Comparative Ex. 1 | - | - | - |
| Example 1 | 38.01 | 1098 | 1.612 |
| Example 2 | 38.04 | 1540 | 1.549 |

As can be seen from Figs. 5B and 5C, when oxygen is introduced while forming the ITO films, the Ag films formed on top of the crystalline ITO films also show crystallinity. In this case, it seems that even though there is a slight mismatch between the lattice constants of the Ag films and the lattice constant of the ITO, the Ag films are grown epitaxially, and as a result, they are formed with crystallinity. The crystal orientation of the Ag films is the (111) plane.

The Ag films in the heat shading film formed in this manner are crystallized, taken in their entirety, with a crystal orientation of the (111) plane. Also each of Ag films is crystallized, with a crystal orientation of the (111) plane.

Thus, it seems that a superior heat-reflecting film is obtained, because the Ag films are crystallized.

When the introduced amount of oxygen is increased and the oxygen partial pressure becomes larger, then the proportion of the Ag film that is damaged by the oxygen plasma becomes larger. Therefore, the heat shading properties are weakened, and a contrary effect results.

*Heat Shading Laminated Glass*

Several kinds of heat shading glass were prepared that included the above-described heat shading glass.

As mentioned above, in considering the properties of the crystallized ITO films and Ag films, it was attempted to optimize the film thicknesses of the heat shading film, so that the visible light transmittance is at least 70% and the reflectance at most 10% for laminated glass, and to minimize the transmissive/reflective achromatic color tones and the sheet resistance.

As a result, it was found that the best overall characteristics are obtained when, starting at the glass substrate, the film thickness of the first metal oxide film (first layer) is 20 to 40nm, the film thickness of the first Ag film (second layer) is 7 to 15nm, the film thickness of the second metal oxide film (third layer) is 60 to 100nm, the film thickness of the second Ag film (fourth layer) is 7 to 15nm, and the film thickness of the third metal oxide film (fifth layer) is 20 to 40nm.

Moreover, as explained below, when laminated glass including a colored glass sheet is used (for example: green tinted glass + PVB + clear glass), then it is preferable that the thicknesses of the first and the second Ag film are 7 to 11nm each.

Based on this knowledge, the following examples of heat shading laminated glass sheets were prepared.

Example 3

Five layers of films for the heat shading film were formed by dc sputtering with an in-line apparatus for laboratory use on a green tinted glass substrate (300mm $\times$ 300mm $\times$ 2mm) prepared by the float method. The flow rate of Ar and $O_2$, the discharge current, and the desired film thickness to be formed are listed in Table 5, along with the values for the following examples.

Table 5

| Film Forming Parameters of Examples | | | | | | |
|---|---|---|---|---|---|---|
| sample | film forming parameter | ITO1 | Ag1 | ITO2 | Ag2 | ITO3 |
| Example 3 | Ar flow [SCCM] | 98 | 98 | 98 | 98 | 98 |
| | $O_2$ FLOW [SCCM] | 10 | 0 | 10 | 0 | 10 |
| | discharge current [A] | 6 | 0.9 | 6 | 0.9 | 6 |
| | design film thickness [nm] | 28 | 8 | 70 | 10 | 28 |
| Example 4 | Ar flow [SCCM] | 100 | 100 | 100 | 100 | 100 |
| | $O_2$ flow [SCCM] | 30 | 0 | 30 | 0 | 30 |
| | discharge current [A] | 30 | 15 | 30 | 15 | 30 |
| | design film thickness [nm] | 40 | 7 | 100 | 9 | 40 |
| Example 5 | Ar flow [SCCM] | 100 | 100 | 100 | 100 | 100 |
| | $O_2$ flow [SCCM] | 30 | 0 | 30 | 0 | 30 |
| | discharge current [A] | 30 | 15 | 30 | 15 | 30 |
| | design film thickness [nm] | 36 | 8 | 90 | 10 | 36 |
| Example 6 | Ar flow [SCCM] | 98 | 98 | 98 | 98 | 98 |
| | $O_2$ flow [SCCM] | 10 | 0 | 10 | 0 | 10 |
| | discharge current [A] | 6 | 0.9 | 6 | 0.9 | 6 |
| | design film thickness [nm] | 28 | 8 | 70 | 10 | 28 |
| Example 7 | Ar flow [SCCM] | 98 | 98 | 98 | 98 | 98 |
| | $O_2$ flow [SCCM] | 10 | 0 | 10 | 0 | 10 |
| | discharge current [A] | 6 | 0.9 | 6 | 0.9 | 6 |
| | design film thickness [nm] | 35 | 9 | 81 | 14 | 30 |

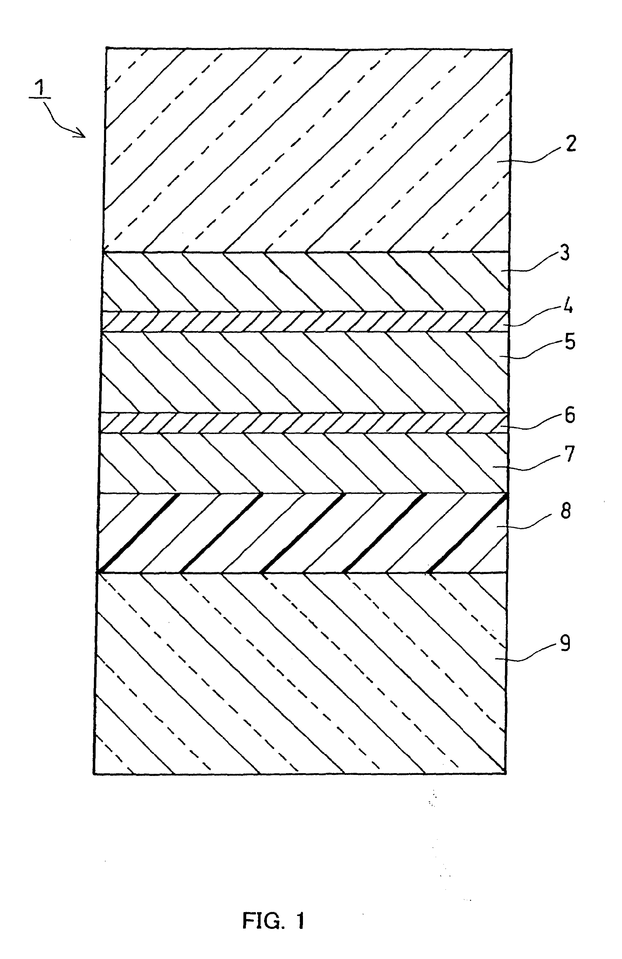

After the sheet resistance of the substrate including the formed films was measured by four point probing, a portion of the substrate was cut off, and the crystallinity of the ITO films 3, 5 and 7 separated by the Ag films 4 and 6 was determined by X-ray diffraction. Moreover, the rest of the substrate 2 was laminated on a clear glass substrate 9 (of 2mm thickness) with a thermoplastic PVB intermediate film (0.76mm) 8 interposed between the two substrates, to prepare a laminated glass 1 (see Fig. 1). The optical characteristics of the resulting laminated glass were measured with a spectrophotometer.

For the sheet resistance, a low value of 4.00Ω/□ was achieved. It also was confirmed that the ITO films in the heat shading film were crystalline, and the crystal orientation was in the (222) plane.

Tables 6 and 7 show the results for the optical properties (transmittance and reflectance). These tables also list the optical properties of the examples explained below, and of simple substrates and laminated glass without a heat shading film.

As can be seen from Table 6, with Example 3, a heat shading glass is obtained that has a transmittance of more than 70% for visible light, as is mandatory for automobile windshields, while having excellent solar radiation (total sunlight) shielding properties and a neutral color.

As can be seen from Table 7, both sides of the heat shading laminated glass have a visible light reflectance of less than 10%, and expressed in color coordinates (a, b), the reflection color is in the range of -3 ≦ a ≦ 3 and -3 ≦ b ≦ 3, and thus neutral.

Table 6

| Transmittance of laminated glass using the laminated glass of the examples | | | | |
|---|---|---|---|---|
| sample | visible light transmittance (%) | transmittance of solar radiation (%) | color | |
| | | | a | b |
| Example 3 | 72.1 | 37.0 | -6.4 | 5.0 |
| Example 4 | 72.4 | 37.8 | -5.1 | 3.7 |
| Example 5 | 71.7 | 34.4 | -6.2 | 2.1 |
| Example 6 | 77.1 | 40.9 | -4.1 | 2.9 |
| Example 7 | 74.4 | 37.2 | -5.3 | 4.2 |
| green glass (2mm) | 85.3 | - | -2.9 | 0.4 |
| clear glass (2mm) | 90.6 | - | -0.6 | 0.1 |
| green + PVB + clear | 83.7 | - | -3.9 | 1.2 |
| clear + PVB + clear | 88.8 | 76.7 | -1.3 | 0.3 |

Table 7

| sample | side where heat shading film is formed | | | side where heat shading film is not formed | | |
|---|---|---|---|---|---|---|
| | reflectance (%) | color | | reflectance (%) | color | |
| | | a | b | | a | b |
| Example 3 | 7.1 | 0.8 | 0.1 | 8.4 | 1.5 | 2.8 |
| Example 4 | 6.2 | −2.1 | −0.8 | 8.0 | −2.2 | 0.2 |
| Example 5 | 7.1 | −0.8 | −1.4 | 7.9 | 0.1 | 0.5 |
| Example 6 | 8.4 | 0.5 | −1.0 | 9.2 | 0.7 | 0.7 |
| Example 7 | 9.2 | 0.6 | 0.0 | 9.9 | 2.3 | 2.0 |
| reflection properties of blank glass | reflectance (%) | color | | | | |
| | | a | a | | | |
| green glass (2mm) | 7.6 | −0.9 | −0.8 | | | |
| clear glass (2mm) | 7.6 | −0.3 | −0.5 | | | |
| green + PVB + clear | 7.5 | −1.1 | −0.3 | | | |
| clear + PVB + clear | 7.9 | −0.2 | −0.5 | | | |

Reflectance of the laminated glass of the examples

Example 4

A predetermined conductive pattern was printed, and a heat shading film was formed on a (green) single glass sheet for a windshield with bus bars using an industrial large-scale in-line dc sputtering apparatus. Then, a laminated glass was made by laminating this glass sheet with another (clear) single glass sheet, with a PVB film interposed between the glass sheets.

Taking a monitoring sample produced at the same time, the sheet resistance, crystallinity and optical properties of the heat shading film were examined. For the sheet resistance, a low value of 4.46Ω/□ was attained. It could be confirmed that the ITO films in the heat shading film are crystalline, with a crystal orientation in the (222) plane.

Tables 6 and 7 show the results for the optical properties (transmittance and reflectance).

Both sides of the heat shading laminated glass have a visible light reflectance of less than 10%, and expressed in color coordinates (a, b), the reflection color is in the range of -3 $\leq$ a $\leq$ 3 and -3 $\leq$ b $\leq$ 3, and thus neutral.

After laminating the glass, the resistance between the terminals to which the bus bars are connected was measured. The resulting inter-terminal resistance was a low resistance of 2.1$\Omega$. Thus, if a current is sent through the bus bars using, for example, a 42V battery, then a calorific value of 840W/m$^2$ can be attained.

Example 5

Example 5 is similar to Example 4, but with modified film thicknesses of the heat shading film.

Taking a monitoring sample produced at the same time, the sheet resistance, crystallinity and optical properties of the heat shading film were examined. For the sheet resistance, a low value of 4.02$\Omega$/$\square$ was attained. Similarly, a low inter-terminal resistance of 1.9$\Omega$/$\square$ was attained when measuring the resistance between the terminals. In the same manner, it can be seen that if the heat shading film is electrically connected to a 42V battery, then a calorific value of 928W/m$^2$ can be attained.

It could also be confirmed that the ITO films are crystalline, with the same crystal orientation in the (222) plane. Tables 6 and 7 show the results for the optical properties (transmittance and reflectance).

Furthermore, both sides of a heat shading laminated glass have a visible light reflectance of less than 10%, and expressed in color coordinates (a, b), the reflection color is in the range of -3 $\leq$ a $\leq$ 3 and -3 $\leq$ b $\leq$ 3, and thus neutral.

In this Example 5, the Ag films are made thicker than in Example 4, so that the resistance is reduced, and the solar-radiation shielding properties are improved.

Moreover, a weather meter test (weatherability test) was performed on this sample, but even after 1000 hours of being irradiated with sunlight, no irregularities, such as cloudiness, could be observed, and the appearance was the same as before the experiment, meaning that a superior result was obtained.

Example 6

In Example 6, the same heat shading film was formed under the same film forming parameters as in Example 3, and the configuration of the laminated glass was *clear + PVP + clear.* Tables 6 and 7 show the results for the optical properties (transmittance and reflectance) of this example.

As can be seen from Table 6, the visible light transmittance, at more than 75%, is higher than that of Example 3, so that a heat shading glass with excellent solar radiation shielding properties and neutral color could be obtained.

Furthermore, both sides of the heat shading laminated glass had a visible light reflectance of less than 10%, and expressed in color coordinates (a, b), the reflection color is in the range of -3 $\leq$ a $\leq$ 3 and -3 $\leq$ b $\leq$ 3, and thus neutral.

Example 7

In Example 7, the same laminated glass as in Example 6 was formed under the same film forming parameters as in Example 3, but the film thicknesses of the heat shading film were varied. The results for the optical properties (transmittance and reflectance) are shown in Tables 6 and 7.

As can be seen from Table 6, the visible light transmittance is even higher than that of Example 3, so that a heat shading glass with excellent solar radiation shielding properties and neutral color could be obtained. In particular; although the configuration of the laminated glass in this Example 7 was *clear + PVB + clear,* the Ag films were made thicker than in Example 3, so that more or less the same solar radiation shielding properties as in Example 3 could be attained.

Furthermore, both sides of the heat shading laminated glass had a visible light reflectance of less than 10%, and expressed in color coordinates (a, b), the reflection color is in the range of -3 $\leq$ a $\leq$ 3 and -3 $\leq$ b $\leq$ 3, and thus neutral.

As becomes clear from these examples, the sheet resistance of the heat shading films in accordance with the present invention is never higher than 5$\Omega$/$\square$.

In Examples 3, 6 and 7, the film formation was carried out with an in-line dc sputtering apparatus for laboratory use. On the other hand, in Examples 4 and 5, the film formation was carried out with a large-scale in-line dc sputtering apparatus for industrial use.

Due to the different apparatus used for the film formation, the reached vacuum degree, exhaustion speed, back pressure etc. during the film formation differ, so that the crystallization degree of the ITO films cannot be set simply with the Ar flow rate and the $O_2$ flow rate. Consequently, when working the present invention, it is necessary to measure the crystallization of the ITO films, and to set the amount of oxygen introduced in the film forming apparatus accordingly.

Comparative Example 2

Comparative Example 2 is an example of the case that no oxygen is introduced during the formation of the ITO films in Example 1. In this example, the ITO films show basically no crystallinity, and an orientation in the (222) plane could not be observed. The film forming parameters of the Comparative Example 2 and Examples 8 and 9 are shown in Table 8. In all these examples, the films were formed with an in-line dc sputtering apparatus for laboratory use.

Table 8

| Film Forming Parameters of Examples | | | | | | |
|---|---|---|---|---|---|---|
| sample | film forming parameter | ITO1 | Ag1 | ITO2 | Ag2 | ITO3 |
| Comparative Ex.2 | Ar flow [SCCM] | 98 | 98 | 98 | 98 | 98 |
| | $O_2$ flow [SCCM] | 0 | 0 | 0 | 0 | 0 |
| | discharge current [A] | 6 | 0.9 | 6 | 0.9 | 6 |
| | design film thickness [nm] | 35 | 10 | 75 | 8 | 35 |
| Example 8 | Ar flow [SCCM] | 98 | 98 | 98 | 98 | 98 |
| | O2 flow [SCCM] | 10 | 0 | 10 | 0 | 10 |
| | discharge current [A] | 6 | 0.9 | 6 | 0.9 | 6 |
| | design film thickness [nm] | 15 | 10 | 70 | 8 | 28 |
| Example 9 | Ar flow [SCCM] | 98 | 98 | 98 | 98 | 98 |
| | O2 flow [SCCM] | 10 | 0 | 10 | 0 | 10 |
| | discharge current [A] | 6 | 0.9 | 6 | 0.9 | 6 |
| | design film thickness [nm] | 28 | 10 | 70 | 8 | 15 |
| Example 10 | Ar flow [SCCM] | 98 | 98 | 98 | 98 | 98 |
| | $O_2$ flow [SCCM] | 10 | 0 | 10 | 0 | 10 |
| | discharge current [A] | 6 | 0.9 | 6 | 0.9 | 6 |
| | design film thickness [nm] | 35 | 10 | 50 | 8 | 35 |

Taking a monitoring sample produced at the same time, the sheet resistance, crystallinity and optical properties of the heat shading film were examined. For the sheet resistance, the value in Comparative Example 2 was 10Ω/ □, which is higher than in Example 3. With regard to the crystallinity of the ITO films, it also was found that their orientation was not in the (222) plane. The results for the optical properties (transmittance and reflectance) are shown in Tables 9 and 10.

Table 9

| Transmittance of the laminated glass of the examples | | | | |
|---|---|---|---|---|
| sample | visible light transmittance (%) | transmittance of solar radiation (%) | color | |
| | | | a | b |
| Comparative Ex. 2 | 56.0 | 36.0 | -6.0 | 7.1 |
| Example 8 | 71.9 | 35.4 | -5.3 | 1.8 |
| Example 9 | 73.4 | 35.8 | -5.6 | 3.1 |
| Example 10 | 69.0 | 33.7 | -7.6 | -0.4 |

In Comparative Example 2, the visible light transmittance was low, and also the color was not neutral. Furthermore, although both sides of the heat shading laminated glass had a visible light reflectance of less than 10%, the reflection color was not neutral.

Table 10

| Reflectance of the laminated glass of the examples | | | | | | |
|---|---|---|---|---|---|---|
| sample | side where heat shading film is formed | | | side where heat shading film is not formed | | |
| | reflectance (%) | color | | reflectance (%) | color | |
| | | a | b | | a | b |
| Comparative Ex. 2 | 6.3 | -4.2 | 3.3 | 4.6 | -2.5 | -10.0 |
| Example 8 | 10.4 | -2.6 | -2.3 | 9.7 | -4.2 | -4.0 |
| Example 9 | 8.6 | -3.2 | -6.8 | 8.6 | -1.3 | -10.0 |
| Example 10 | 11.7 | 5.7 | 6.4 | 12.0 | 7.9 | 5.5 |

Examples 8,9 and 10

In Examples 8, 9 and 10, the film formation is performed basically under the same conditions as in Example 3, but the films of the heat shading film include films outside the above-noted film thickness ranges.

In Example 8, the visible light transmittance was higher than 70% and the solar radiation transmittance was inhibited sufficiently, but the color was not neutral. Furthermore, on one side of the heat shading laminated glass, it was not possible to obtain a visible light reflectance of less than 10%, and also the reflection color of the other side was not neutral.

In Example 9, the visible light transmittance was higher than 70% and the solar radiation transmittance was sufficiently inhibited, but the color was not neutral. Furthermore, it was possible to obtain a visible light reflectance of less than 10% for both sides of the heat shading laminated glass, but on both sides the reflection color was not neutral.

In Example 10, the visible light transmittance was 69%, but the solar radiation transmittance was sufficiently inhibited. It was not possible to obtain a visible light reflectance of less than 10% for both sides of the heat shading laminated glass, and on both sides the reflection color was not neutral.

Application Example

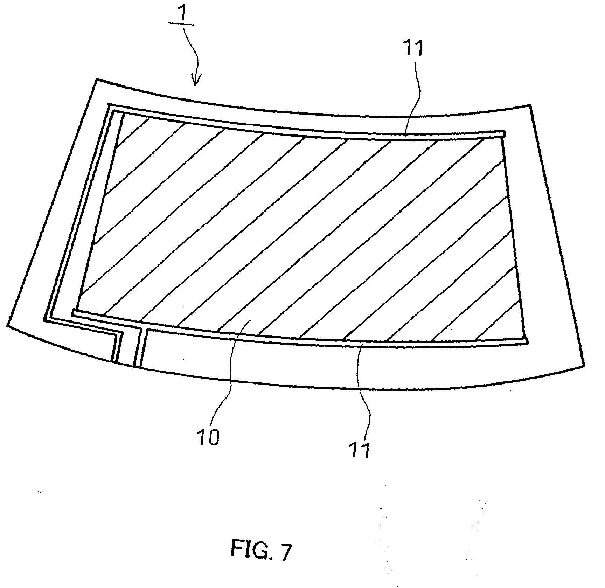

Laminated glasses provided with heat shading films prepared in accordance with Examples 4 and 5 were applied as a windshield glass of an automobile (see Fig. 7). In order to ensure the necessary supply voltage for engine start and control when the battery is under full load, this automobile is provided with a supply voltage of 42V

When a current was supplied from this power source to the bus bars of the glass, suitable defogging and fogging prevention of the windshield glass was attained.

In the heat shading laminated glass in accordance with the present invention, crystallized ITO films are formed by dc sputtering on a glass sheet under the introduction of oxygen using an oxide ITO target, crystallization is enhanced by layering Ag films on top of the ITO films, and a heat shading film of five-layer configuration is formed, in which each layer is optimized, which is used for a laminated glass.

With this configuration, a heat shading laminated glass with superior heat shading properties, and colorless transmission and reflection color that does not create an awkward appearance in an automobile was obtained, while satisfying a visible light transmittance of at least 70%, as is required for automobile safety glass. Moreover, a superior durability was obtained without adding a protection layer or the like.

Furthermore, in a laminated glass with this heat shading film in a windshield provided with upper and lower bus bars, a calorific value of more than 800W/m$^2$ could be achieved with a 42V supply voltage, because of the low sheet resistance of 5Ω/□.

**Claims**

**1.**  A heat shading glass comprising:

a glass sheet; and
a heat shading film formed on the glass sheet;
wherein the heat shading film comprises a first metal oxide film, a first Ag film, a second metal oxide film, a second Ag film, and a third metal oxide film, layered in that order on the glass sheet;

wherein the oxide films include indium oxide containing tin oxide; and

wherein an X-ray diffraction chart of the heat shading film shows a diffraction peak of the indium oxide as well as a diffraction peak of the Ag.

2.   The heat shading glass of Claim 1, wherein the crystal orientation of the indium oxide is the (222) plane, and the crystal orientation of the Ag is the (111) plane.

3.   The heat shading glass of Claim 1, wherein the peak intensity of the indium oxide diffraction peak per unit film thickness of the metal oxide films is at least 50(cps·2 $\theta$ /nm).

4.   The heat shading glass of Claim 1, wherein the diffraction angle 2 $\theta$ of the indium oxide for X-ray diffraction at the Cu K$\alpha$ line is 29.9° < 2 $\theta$ < 30.1°.

5.   A heat shading glass comprising:

a glass sheet; and

a heat shading film formed on the glass sheet;

wherein the heat shading film comprises a first metal oxide film, a first Ag film, a second metal oxide film, a second Ag film, and a third metal oxide film, layered in that order on the glass sheet;

wherein the oxide films are crystalline and include indium oxide containing tin oxide; and

wherein, in an X-ray diffraction chart of the heat shading film, the crystal orientation of the indium oxide is the (222) plane.

6.   The heat shading glass according to Claim 5, wherein the Ag films are crystalline.

7.   The heat shading glass according to Claim 6, wherein the crystal orientation of the Ag is the (111) plane.

8.   The heat shading glass as claimed in any one of Claims 1 to 7, wherein the sheet resistance of the heat shading film is not larger than 5Ω/ □.

9.   A heat shading laminated glass comprising:

the heat shading glass as claimed in any one of Claims 1 to 8;

a thermoplastic resin; and

taking the glass sheet of said heat shading glass as a first glass sheet, a second glass sheet;

wherein the first glass sheet, the heat shading film, the thermoplastic resin, and the second glass sheet are layered in that order.

10.  The heat shading laminated glass of Claim 9, wherein

the film thickness of the first metal oxide film is 20 to 40nm;

the film thickness of the first Ag film is 7 to 15nm;

the film thickness of the second metal oxide film is 60 to 100nm;

the film thickness of the second Ag film is 7 to 15nm; and

the film thickness of the third metal oxide film is 20 to 40nm.

11.  The heat shading laminated glass of Claim 10, wherein the film thicknesses of the first and second Ag films are 7 to 11nm each.

12.  The heat shading laminated glass of Claim 10,

wherein visible light transmittance is at least 70%;

wherein, expressed in color coordinates (a, b), the reflection color is in the range of -3 $\leq$ a $\leq$ 3 and -3 $\leq$ b $\leq$ 3 on both sides of the heat shading laminated glass; and

wherein the visible light reflectance is at most 10% for both sides of the heat shading laminated glass.

13.  The heat shading laminated glass of Claim 9, wherein a surface of at least one glass sheet selected from the first and the second glass sheets is provided with a means for electrically connecting the heat shading film.

**14.** A method for manufacturing a heat shading glass, comprising:

forming, as a heat shading film, a first metal oxide film, a first Ag film, a second metal oxide film, a second Ag film, and a third metal oxide film, by sputtering on a glass sheet;
wherein the metal oxide films are formed using a target of indium oxide containing tin oxide, while introducing oxygen such that the metal oxide films show crystallinity.

**15.** The method for manufacturing a heat shading glass according to Claim 14, wherein the metal oxide films are formed while introducing oxygen such that the crystal orientation of the indium oxide is the (222) plane.

**16.** The method for manufacturing a heat shading glass according to Claim 14, wherein the Ag films are formed such that they are crystalline.

**17.** The method for manufacturing a heat shading glass according to Claim 16, wherein the Ag films are formed such that the crystal orientation of the Ag is the (111) plane.

**18.** A method for manufacturing a heat shading laminated glass, comprising bonding together:

a heat shading glass obtained by the method for manufacturing a heat shading glass as claimed in any one of Claims 14 to 17 and;
taking the glass sheet of said heat shading glass as a first glass sheet, a second glass sheet;
in such manner that the first glass sheet, the heat shading film, a thermoplastic resin, and the second glass sheet are layered in that order.

**19.** The method for manufacturing a heat shading laminated glass according to Claim 18, wherein

the film thickness of the first metal oxide film is 20 to 40nm;
the film thickness of the first Ag film is 7 to 15nm;
the film thickness of the second metal oxide film is 60 to 100nm;
the film thickness of the second Ag film is 7 to 15nm; and
the film thickness of the third metal oxide film is 20 to 40nm.

FIG. 1

FIG. 2A

FIG. 2B

FIG. 2C

FIG. 3A

FIG. 3B

FIG. 3C

$$PB = PA + PC = PA + \frac{OD}{2}$$

FIG. 4

FIG. 5A

FIG. 5B

FIG. 5C

FIG. 6A

FIG. 6B

FIG. 6C

FIG. 7

## EUROPEAN SEARCH REPORT

**European Patent Office**

Application Number

EP 00 31 0813

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 378 917 A (NIPPON SHEET GLASS CO LTD) 25 July 1990 (1990-07-25) * page 2, line 53 - page 5, line 15; claims; tables * * page 6, line 16 - page 7, line 46 * | 1-19 | C03C17/36 |
| Y | DE 197 33 053 A (LEYBOLD AG) 4 February 1999 (1999-02-04) * page - * | 1-19 | |
| Y | EP 0 599 071 A (LEYBOLD AG) 1 June 1994 (1994-06-01) * page 1, line 1 - page 4, line 30; claims * | 1-19 | |
| A | US 4 943 484 A (GOODMAN RONALD D) 24 July 1990 (1990-07-24) * abstract; claims * | 1-19 | |
| D,A | US 5 419 969 A (ANDO EIICHI ET AL) 30 May 1995 (1995-05-30) * the whole document * | 1-4 | **TECHNICAL FIELDS SEARCHED (Int.Cl.7)** |
| A | US 5 308 706 A (MIYAZAKI TAKAHARU ET AL) 3 May 1994 (1994-05-03) * abstract * | 1 | C03C |

The present search report has been drawn up for all claims

| Place of search | Date of completion of the search | Examiner |
|---|---|---|
| THE HAGUE | 26 April 2001 | Reedijk, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 31 0813

This annex lists the patent family membersrelating to the patent documents cited in the above–mentioned European search report.
The members are as contained in the European Patent Office EDP file on
The European Patent Office is in no way liable for these particulars which are merely given for the purpose of information.

26-04-2001

| Patent document cited in search report | | | Publication date | Patent family member(s) | | | Publication date |
|---|---|---|---|---|---|---|---|
| EP | 0378917 | A | 25-07-1990 | JP | 2258655 | A | 19-10-1990 |
| | | | | CA | 2005634 | A | 16-06-1990 |
| DE | 19733053 | A | 04-02-1999 | JP | 11116280 | A | 27-04-1999 |
| EP | 0599071 | A | 01-06-1994 | DE | 4239355 | A | 26-05-1994 |
| | | | | JP | 6199544 | A | 19-07-1994 |
| US | 4943484 | A | 24-07-1990 | AU | 633263 | B | 28-01-1993 |
| | | | | US | 5332888 | A | 26-07-1994 |
| | | | | AT | 81820 | T | 15-11-1992 |
| | | | | AU | 605189 | B | 10-01-1991 |
| | | | | AU | 7969787 | A | 08-03-1988 |
| | | | | BR | 8707429 | A | 01-11-1988 |
| | | | | CA | 1333044 | A | 15-11-1994 |
| | | | | DE | 3782417 | A | 03-12-1992 |
| | | | | DE | 3782417 | D | 03-12-1992 |
| | | | | DE | 3782417 | T | 08-04-1993 |
| | | | | EP | 0277228 | A | 10-08-1988 |
| | | | | ES | 2005263 | A | 01-03-1989 |
| | | | | JP | 1500653 | T | 09-03-1989 |
| | | | | KR | 9510579 | B | 20-09-1995 |
| | | | | MX | 164291 | B | 30-07-1992 |
| | | | | WO | 8801230 | A | 25-02-1988 |
| US | 5419969 | A | 30-05-1995 | JP | 3053668 | B | 19-06-2000 |
| | | | | JP | 4357025 | A | 10-12-1992 |
| | | | | US | 5532062 | A | 02-07-1996 |
| | | | | CA | 2046161 | A | 06-01-1992 |
| | | | | DE | 69122554 | D | 14-11-1996 |
| | | | | DE | 69122554 | T | 13-02-1997 |
| | | | | DE | 69128729 | D | 19-02-1998 |
| | | | | DE | 69128729 | T | 30-04-1998 |
| | | | | EP | 0464789 | A | 08-01-1992 |
| | | | | EP | 0698585 | A | 28-02-1996 |
| | | | | ES | 2095271 | T | 16-02-1997 |
| | | | | KR | 158213 | B | 16-11-1998 |
| | | | | SG | 47839 | A | 17-04-1998 |
| | | | | SG | 43266 | A | 17-10-1997 |
| | | | | US | 5413864 | A | 09-05-1995 |
| | | | | JP | 3053669 | B | 19-06-2000 |
| | | | | JP | 5042624 | A | 23-02-1993 |
| | | | | CA | 2056524 | A | 30-05-1992 |
| | | | | DE | 69122046 | D | 17-10-1996 |
| | | | | DE | 69122046 | T | 06-02-1997 |
| | | | | EP | 0488048 | A | 03-06-1992 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                EP 00 31 0813

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2001

| Patent document cited in search report | Publication date | Patent family member(s) | | Publication date |
|---|---|---|---|---|
| US 5419969 A | | ES | 2094181 T | 16-01-1997 |
| | | JP | 3068924 B | 24-07-2000 |
| | | JP | 5024149 A | 02-02-1993 |
| | | KR | 187963 B | 01-06-1999 |
| | | SG | 46590 A | 20-02-1998 |
| US 5308706 A | 03-05-1994 | CA | 1338926 A | 25-02-1997 |
| | | DE | 3924935 A | 22-02-1990 |
| | | FR | 2634904 A | 02-02-1990 |
| | | GB | 2222984 A,B | 28-03-1990 |
| | | JP | 2124748 A | 14-05-1990 |
| | | JP | 5019497 B | 16-03-1993 |
| | | KR | 9615148 B | 01-11-1996 |

EPO FORM P0459

For more details about this annex : see Official Journal of the European Patent Office, No. 12/82